# EUROPÄISCHE PATENTSCHRIFT

(11) **EP 3 036 086 B1**
(45) Veröffentlichungstag und Bekanntmachung des Hinweises auf die Patenterteilung: **04.10.2017**
(21) Anmeldenummer: 14781052.7
(22) Anmeldetag: 22.08.2014
(51) Int. Cl.: B29C 67/00, B22F 3/105, B29C 35/00

(54) **VORRICHTUNG ZUM HERSTELLEN DREIDIMENSIONALER OBJEKTE**
DEVICE FOR PRODUCING THREE-DIMENSIONAL OBJECTS
DISPOSITIF DE FABRICATION D'OBJETS TRIDIMENSIONNELS

(30) Priorität: 23.08.2013 DE 102013109162
(43) Veröffentlichungstag der Anmeldung: 29.06.2016
(73) Patentinhaber: FIT AG, 92331 Lupburg (DE)
(72) Erfinder: FRUTH, Carl, 92331 Parsberg (DE)
(74) Vertreter: Schneider, Andreas
(86) Internationale Anmeldenummer: PCT/EP2014/002307
(87) Internationale Veröffentlichungsnummer: WO 2015/024671

(56) Entgegenhaltungen:
- EP-A1- 1 674 192
- WO-A1-2006/125507

## Beschreibung

Die Erfindung betrifft eine Vorrichtung sowie ein Verfahren zum Herstellen dreidimensionaler Objekte durch selektives Verfestigen eines schichtweise aufgebrachten Aufbaumaterials.

Aus dem Stand der Technik sind Vorrichtungen und Verfahren zur Herstellung dreidimensionaler Objekte durch selektives Verfestigen eines schichtweise aufgetragenen Aufbaumaterials in großer Zahl bekannt. Zu nennen sind hier beispielsweise das Lasersintern oder das Selektive Maskensintern. Anlagen, mit denen ein solches Schichtbauverfahren durchgeführt wird, werden auch als Rapid Prototyping-Systeme bezeichnet. Diese Schichtbauverfahren dienen zur Herstellung von schichtweise aufgebauten Bauteilen aus verfestigbarem Material, wie Harz, Kunststoff, Metall oder Keramik, und werden beispielsweise zur Fertigung von technischen Prototypen verwendet. Dabei können mit Hilfe einer additiven Fertigungsmethode dreidimensionale Objekte direkt aus CAD-Daten hergestellt werden.

Bei einem solchen Schichtbauverfahren erfolgt der Aufbau der Objekte schichtweise, d. h. es werden Schichten eines Aufbaumaterials sukzessive übereinander aufgetragen. Vor dem Aufbringen der jeweils nächsten Schichten werden die dem zu fertigenden Objekt entsprechenden Stellen in den jeweiligen Schichten selektiv verfestigt. Das Verfestigen erfolgt beispielsweise durch lokales Erhitzen eines zumeist pulverförmigen Schichtrohmaterials mit Hilfe einer Strahlungsquelle. Indem gezielt Strahlung in geeigneter Weise in die gewünschten Bereiche eingebracht wird, kann eine exakt definierte, beliebig geartete Objektstruktur erzeugt werden. Dabei ist auch die Schichtdicke einstellbar. Ein solches Verfahren ist insbesondere zur Herstellung von dreidimensionalen Körpern verwendbar, indem mehrere dünne, individuell gestaltete Schichten aufeinanderfolgend erzeugt werden.

Typischerweise wird das zu verfestigende Aufbaumaterial auf eine Temperatur vorgewärmt, die unterhalb der Verarbeitungstemperatur liegt. Mit Hilfe eines zusätzlichen Energieeintrags wird anschließend die Verarbeitungstemperatur erreicht.

Beispielsweise wird ein Kunststoffmaterial bei einem Lasersinterprozeß auf eine Temperatur unterhalb der Sintertemperatur vorgewärmt. Die durch den Laser eingebrachte Energie trägt dann lediglich die Differenzwärmemenge zum Aufschmelzen der Pulverteilchen bei.

Das Vorwärmen erfolgt in vielen Fällen über ein Erwärmen der Aufbauplattform. Mit ansteigender Bauteilhöhe nimmt bei einem solchen Vorwärmen "von unten" jedoch der Wärmestrom der Vorwärmung durch Verluste und zunehmendes Volumen der Pulverschüttung ab.

Auch andere Verfahren führen zu einer unerwünschten unregelmäßigen Temperaturverteilung in dem Aufbaumaterial. Dies trifft insbesondere auch auf solche Verfahren zu, bei denen das Vorwärmen über eine Wärmezufuhr "von oben" erfolgt. Dabei werden zeitweise beheizbare Einrichtungen über der Aufbauschicht plaziert. Durch komplizierte Steuerungen der Heizkurve und andere aufwendige Maßnahmen wird versucht, eine gleichmäßige Temperaturverteilung in dem vorzuwärmenden Aufbaumaterial zu erreichen.

Aus WO 2006/125507 A1 ist eine Vorrichtung zum Herstellen dreidimensionaler Objekte durch selektives Verfestigen eines schichtweise aufgebrachten Aufbaumaterials bekannt, bei der auf einer in einer x-y-Ebene angeordneten Aufbauplattform ein dreidimensionales Objekt schichtweise erzeugt wird. Dabei ist ein Heizelement zum Eintragen von Wärmeenergie in das Aufbaumaterial vorgesehen und es gibt eine Antriebseinrichtung zum Erzeugen einer Relativbewegung zwischen der Aufbauplattform und dem Heizelement, nämlich einen Vertikalantrieb zum Anheben bzw. Absenken der Aufbauplattform.

Eine Aufgabe der vorliegenden Erfindung ist es, den Herstellungsprozeß zu verbessern, insbesondere den Wärmeeintrag zu optimieren.

Diese Aufgabe wird durch eine Vorrichtung nach Anspruch 1 bzw. durch ein Verfahren nach Anspruch 9 gelöst. Vorteilhafte Ausführungen der Erfindung sind in den Unteransprüchen angegeben. Die im Folgenden im Zusammenhang mit der Vorrichtung erläuterten Vorteile und Ausgestaltungen gelten sinngemäß auch für das erfindungsgemäße Verfahren und umgekehrt.

Die Erfindung schlägt vor, die aus dem Stand der Technik bekannte Vorgehensweise einer getakteten Herstellung, bei der innerhalb eines Taktes nach einem Materialauftrag zunächst ein Vorwärmen und anschließend ein selektives Verfestigen erfolgt, bevor in einem sich anschließenden neuen Takt erneut ein Materialauftrag vorgenommen wird, nicht mehr weiterzuverfolgen. Statt dessen schlägt die Erfindung einen kontinuierlichen Herstellungsprozeß vor, bei dem das Aufbringen des Aufbaumaterials, das Vorwärmen und das selektive Verfestigen durch lokales Erhitzen des Aufbaumaterials gleichzeitig erfolgt, und zwar an unterschiedlichen Stellen ein und desselben herzustellenden Objektes bzw. auch an mehreren Objekten gleichzeitig, sofern mehrere Objekte auf der Aufbauplattform hergestellt werden.

Die erfindungsgemäße Vorrichtung umfaßt eine in einer x-y-Ebene angeordnete Aufbauplattform, auf der wenigstens ein dreidimensionales Objekt schichtweise erzeugt wird, ein die Aufbauplattform zumindest teilweise überdeckendes Heizelement zum Eintragen von Wärmeenergie in das Aufbaumaterial sowie eine Antriebseinrichtung zum Erzeugen einer Relativbewegung zwischen der Aufbauplattform und dem Heizelement in x- und/oder y-Richtung. Das Heizelement weist wenigstens zwei gleichzeitig verwendbare Funktionsöffnungen auf, wobei eine der wenigstens zwei Funktionsöffnungen als Materialdurchlaß und eine andere der wenigstens zwei Funktionsöffnungen als Strahlungsdurchlaß ausgebildet ist. Erfindungsgemäß umfaßt die Vorrichtung eine zusätzliche Heiz- und/oder Kühleinrichtung zur Temperierung von durch den Materialdurchlaß aufgebrachtem Aufbaumaterial.

Entsprechend umfaßt das erfindungsgemäße Verfahren die Schritte: schichtweises Erzeugen des wenigstens einen dreidimensionalen Objektes auf einer in einer x-y-Ebene angeordneten Aufbauplattform, Eintragen von Wärmeenergie in das Aufbaumaterial mit Hilfe eines die Aufbauplattform zumindest teilweise überdeckenden Heizelements, Erzeugen einer Relativbewegung zwischen der Aufbauplattform und dem Heizelement in x- und/oder y-Richtung mittels einer Antriebseinrichtung sowie gleichzeitiges Durchlassen von Aufbaumaterial und Strahlungsenergie durch das Heizelement unter Verwendung von wenigstens zwei Funktionsöffnungen. Erfindungsgemäß umfaßt das Verfahren ein Heizen oder Kühlen des durch den Materialdurchlaß aufgebrachten Aufbaumaterials mittels einer zusätzlichen Heiz- und/oder Kühleinrichtung.

Eine grundlegende Idee der Erfindung besteht in der Verwendung eines zum Vorwärmen des Aufbaumaterials dienenden Heizelementes, welches sich durch Funktionsöffnungen auszeichnet, die als Materialdurchlaß und Strahlungsdurchlaß, mithin also als Beschichtungsöffnung zum Aufbringen von Aufbaumaterial und als Belichtungsöffnung zum lokalen Erhitzen des Aufbaumaterials dienen. Wird ein solches Heizelement in geeigneter Weise relativ zu der Aufbauplattform bewegt, kann ein gleichzeitiges Aufbringen von Aufbaumaterial, Vorwärmen und selektives Verfestigen erfolgen und damit ein nicht getaktetes, ununterbrochenes Herstellen des wenigstens einen Objektes. Der Aufbau des Objektes bzw. der Objekte erfolgt mit anderen Worten kontinuierlich, wobei die Aufbaugeschwindigkeit durch die Relativbewegung zwischen Aufbauplattform und Heizelement bestimmt wird. Die geometrische Anordnung der sich in unterschiedlichen Herstellungsprozeßphasen befindenden Objektbereiche, insbesondere der Abstand dieser Objektbereiche zueinander, wird durch die Anordnung der Funktionsöffnungen in dem Heizelement bestimmt, insbesondere durch den Abstand dieser Funktionsöffnungen zueinander.

Beispielsweise kann in einem ersten Objektbereich das Aufbaumaterial in Form einer frisch aufgebrachten Pulverschüttung durch das Heizelement vorgewärmt werden, während in einem in Bewegungsrichtung hinter dem ersten Objektbereich angeordneten zweiten Objektbereich mit Hilfe von durch eine Belichtungsöffnung durchtretender Strahlungsenergie gerade eine Schicht n verfestigt wird. Zeitgleich erfolgt in einem dritten Objektbereich, der in Bewegungsrichtung hinter dem zweiten Objektbereich liegt, ein Nachheizen der dort kurz zuvor verfestigten Aufbauschicht n durch das Heizelement, während in einem hinter dem dritten Objektbereich liegenden vierten Objektbereich durch eine Beschichtungsöffnung hindurchgeführtes weiteres Aufbaumaterial für eine nächste Schicht n+1 auf die bereits vorhandene Schicht n aufgebracht wird. Die Objektbereiche können dabei Bereiche eines Objektes oder aber auch Bereiche unterschiedlicher Objekte sein, wenn mehrere Objekte auf der Aufbauplattform angeordnet sind.

Die Wärmezufuhr für das Vorwärmen erfolgt "von oben", wodurch die Nachteile einer Wärmezufuhr über die Aufbauplattform nicht auftreten. Zugleich erfolgt die Wärmezufuhr vorzugsweise nicht nur zeitweise, nämlich nicht nur dann, wenn sich das Heizelement wie im Stand der Technik für kurze Zeit oberhalb der Aufbauschicht befindet, sondern, ermöglicht durch die neuartige kontinuierliche Arbeitsweise, dauerhaft. Damit wird auf einfache Art und Weise eine Optimierung des Wärmeeintrags erreicht. Zugleich wird der Herstellungsprozeß insgesamt verbessert.

Darüber hinaus ermöglicht es die vorliegende Erfindung, sich von der Notwendigkeit einer gleichmäßigen Temperaturverteilung zu lösen. Da an unterschiedlichen Stellen das Herstellungsverfahren unterschiedlich weit fortgeschritten ist, können an unterschiedlichen Stellen unterschiedliche Temperaturen von Vorteil sein. So kann beispielsweise in einem Bereich eine Vorwärmtemperatur zum Vorbereiten des Aufbaumaterials auf die bevorstehende lokale Erhitzung vorteilhaft sein; in einem benachbarten Bereich kann hingegen eine Nachheiztemperatur vorliegen, wie sie zum Erreichen bestimmter Eigenschaften der bereits verfestigten Schicht vorteilhaft ist, beispielsweise um Verzug zu verhindern.

Da das Heizelement dauerhaft zur Verfügung steht, kann eine solche definierte ungleichmäßige Temperaturverteilung auf besonders einfache Weise verwirklicht werden. In einer vorteilhaften Ausführungsform der Erfindung weist das Heizelement mehrere unterschiedlich temperierbare Bereiche auf. Dies wird beispielsweise mit Hilfe mehrerer, voneinander unabhängig betreibbarer Heizmodule erreicht.

Erfindungsgemäß ist eine zusätzliche Heiz- und/oder Kühleinrichtung zur Temperierung von durch den Materialdurchlaß aufgebrachtem Aufbaumaterial vorgesehen. "Zusätzlich" bedeutet dabei, daß die Heiz- und/oder Kühleinrichtung zusätzlich zu dem Heizelement, das zum Vorwärmen des Aufbaumaterials dient, und zusätzlich zu der Strahlungsquelle, die zum selektiven Verfestigen des Aufbaumaterials dient, vorgesehen ist.

Die zusätzliche Heiz- und/oder Kühleinrichtung heizt oder kühlt das durch den Materialdurchlaß aufgebrachte Aufbaumaterial. Hierdurch ist es möglich, ein definiert temperiertes Aufbaumaterial aufzubringen und/oder ein bereits aufgebrachte Aufbaumaterial definiert zu temperieren.

Die zusätzliche Heiz- und/oder Kühleinrichtung kann entweder nur zum Heizen oder nur zum Kühlen oder aber vorzugsweise zum wahlweisen Heizen oder Kühlen ausgebildet sein. Entsprechend umfaßt die zusätzliche Heiz- und/oder Kühleinrichtung eine Anzahl geeigneter Heiz- und/oder Kühlelemente.

Die zusätzliche Heiz- und/oder Kühleinrichtung kann dabei allgemein zur Unterstützung der Wirkung des Heizelements dienen. Die zusätzliche Heiz- und/oder Kühleinrichtung dient somit, neben dem Heizelement, direkt oder indirekt zur Bereitstellung mehrerer unterschiedlich temperierter Bereiche des Aufbaumaterials bzw. einer definierten Temperaturverteilung innerhalb des auf der Aufbauplattform angeordneten Aufbaumaterials.

In einer Ausführungsform der Erfindung wird eine solche zusätzliche Heizeinrichtung durch eine zusätzliche Wärmequelle zur Bereitstellung von Wärmeenergie gebildet, insbesondere in Form einer Strahlungsquelle.
Dabei kann die Strahlungsquelle oberhalb des Heizelements angeordnet sein. Vorzugsweise ist in diesem Fall wenigstens eine der Funktionsöffnungen als Heizöffnung zum zusätzlichen Eintragen von Wärmeenergie ausgebildet. Dabei kann es sich bei der Heizöffnung um eine Funktionsöffnung handeln, die bereits eine andere Funktion ausübt; beispielsweise kann ein bereits als Belichtungsöffnung dienender Strahlungsdurchlaß zugleich als Heizöffnung dienen.

In einer Ausführungsform der Erfindung wird als zusätzliche Kühleinrichtung ein Kühlelement verwendet, das zum Entziehen von Wärmeenergie ausgebildet ist, beispielsweise ein elektrothermischer Wandler. Die Anordnung der Kühleinrichtung entspricht in einer Ausführungsform der Erfindung der oben beschriebenen Anordnung der Heizeinrichtung, wobei eine der Funktionsöffnungen als Kühlöffnung ausgebildet ist oder eine Funktionsöffnung, die bereits eine andere Funktion ausübt, als Kühlöffnung dient.

Vorzugsweise ist die zusätzliche Heiz- und/oder Kühleinrichtung jedoch zur direkten und unmittelbaren Temperierung des Aufbaumaterials ausgebildet, wobei diese Temperierung vorzugsweise erfolgt, bevor das Aufbaumaterial einer beabsichtigten Erwärmung durch das Heizelement ausgesetzt wird. Da sich Aufbauplattform und Heizelement relativ zueinander bewegen, erfolgt mit anderen Worten die zusätzliche Temperierung des Aufbaumaterials vorzugsweise bevor das Aufbaumaterial unter dem Heizelement verschwindet.

Genauer gesagt erfolgt die zusätzliche Temperierung während des Aufbringvorgangs, also während des Durchtritts des Aufbaumaterials durch die Beschichtungsöffnung, und/oder unmittelbar darauffolgend. Anders ausgedrückt erfolgt ein zusätzliches Heizen oder Kühlen des sich durch die Beschichtungsöffnung hindurchbewegenden Aufbaumaterials oder des bereits aufgebrachten, unmittelbar unterhalb der Beschichtungsöffnung oder nahe der Beschichtungsöffnung liegenden Aufbaumaterials.

Zu diesem Zweck ist die zusätzliche Heiz- oder Kühleinrichtung vorzugsweise in unmittelbarer Nähe einer Beschichtungsöffnung angeordnet, beispielsweise an einer Kante der als Materialdurchlaß dienenden Funktionsöffnung. Somit dient also diese Beschichtungsöffnung zugleich als Heiz- oder Kühlöffnung.

Das Heizen oder Kühlen des Aufbaumaterials während dessen Aufbringens erfolgt dabei vorzugsweise mittelbar. Mit anderen Worten erfolgt eine Wärmeübertragung zu dem Aufbaumaterial hin bzw. von dem Aufbaumaterial weg als Wärmestrahlung oder Wärmeströmung.

Besonders vorteilhaft ist die Nutzung einer Wärmeströmung. Die zusätzliche Heiz- oder Kühleinrichtung ist in einer besonders bevorzugten Ausführungsform der Erfindung derart ausgebildet, daß sie eine Temperierung des Aufbaumaterials mit Hilfe eines geeignet temperierten Gasstromes durchführt. In diesem Fall ist die zusätzliche Heiz- und/oder Kühleinrichtung zur Bereitstellung eines wärmenden oder kühlenden Gasstromes an dem Ort des Materialauftrags, also unmittelbar an der Beschichtungsöffnung oder in der Nähe der Beschichtungsöffnung, ausgebildet. Damit kann die Temperierung des Aufbaumaterials während des Durchtritts des Aufbaumaterials durch die Beschichtungsöffnung und/oder unmittelbar darauffolgend, d. h. bei dem bereits aufgetragenen Aufbaumaterial stattfinden.

Durch einen solchen durch das Aufbaumaterial hindurch bzw. an dem Aufbaumaterial entlang führenden Gasstrom kann nicht nur eine Heizung oder Kühlung des Aufbaumaterials erfolgen.

Wird der Gasstrom auf geeignete Weise angewendet, kann darüber hinaus erreicht werden, daß sich Teilchen, wie beispielsweise Rauch oder Dämpfe, die sich während des Verfestigens des Aufbaumaterials bilden, also beispielsweise während des Aufschmelzens, nicht auf dem zu verfestigenden Material absetzen oder Umgebungsflächen verschmutzen. Statt dessen können diese Teilchen durch den Gasstrom gezielt abgeführt werden. Durch das Entfernen dieser Teilchen wird zudem eine Verschmutzung der zum Einsatz kommenden Strahlungsquelle, beispielsweise des Lasers sowie der verwendeten Optik, vermieden, was zu einem störungsfreien Betrieb beiträgt.

Wird der Gasstrom zur Kühlung verwendet, kann das Aufbauverfahren mit sehr hohe Temperaturen, insbesondere Schmelztemperaturen, betrieben werden. Durch die Kühlung des Aufbaumaterials mittels Gasstrom kann das Aufbauverfahren dann bei Temperaturen betrieben werden, bei denen üblicherweise das verwendete Aufbaumaterial bereits Schaden nimmt.

Als Medium für den Gasstrom kann Luft verwendet werden. Vorzugsweise wird jedoch ein für das verwendete Aufbauverfahren geeignetes Schutzgas eingesetzt.

Die zusätzliche Heiz- und/oder Kühleinrichtung umfaßt neben Heiz- und/oder Kühlelementen vorzugsweise auch mit den Heiz- und/oder Kühlelementen zusammenwirkende Mittel zum Erzeugen des Gasstromes und/oder Mittel zum Lenken des Gasstromes entlang eines geeigneten Strömungsweges. Die Mittel zum Erzeugen des Gasstromes umfassen vorzugsweise eine Absaugvorrichtung, die vorteilhafterweise zwischen dem Heizelement und der Aufbauschicht plaziert ist.

Vorteilhaft zur Vermeidung einer nachteiligen Beeinträchtigung des Aufbaumaterials, insbesondere zur Vermeidung von Verwirbelungen oder dergleichen, ist die Bereitstellung eines Gasstromes mit gleichmäßiger Gasgeschwindigkeit.

In einem bevorzugten Ausführungsbeispiel der Erfindung umfaßt die zusätzliche Heiz- und/oder Kühleinrichtung sowohl Heiz- und/oder Kühlelemente als auch Mittel zur Bereitstellung eines temperierten Gasstromes, so daß die Vorteile der unterschiedlichen Übertragungsarten Leitung, Strahlung und Strömung vorteilhaft miteinander kombiniert werden.

Für die Übertragung der Heizenergie auf das Aufbaumaterial besonders vorteilhaft hat sich eine Ausführungsform der Erfindung erwiesen, bei der das Heizelement im wesentlichen plattenförmig ausgebildet ist. Die Plattenform des Heizelements ermöglicht zugleich eine besonders einfache Ausführung der Funktionsöffnungen. Vorteilhafterweise sind Heizelement und Aufbauplattform dabei derart ausgeführt, daß sie sich möglichst großflächig, vorzugsweise vollständig, überdecken bzw. während der Herstellungsprozesses möglichst großflächig, vorzugsweise vollständig, in Überdeckung miteinander gebracht werden können.

In einer bevorzugten Ausführungsform der Erfindung ist das Heizelement oberhalb der Aufbauplattform angeordnet. In einer Variante ist das Heizelement dabei von der jeweils obersten Aufbauschicht beabstandet. Das Aufwärmen erfolgt durch Wärmestrahlung. In einer alternativen Variante berührt das Heizelement die oberste Aufbauschicht. Das Aufwärmen erfolgt dann durch Wärmeleitung.

Befindet sich die Aufbauplattform innerhalb einer im Betriebszustand geschlossenen Prozeßkammer, dann kann das Heizelement als Begrenzungswand der Prozeßkammer dienen. Mit anderen Worten wird in diesem Fall die Prozeßkammer durch das Heizelement abgeschlossen. Das Heizelement ist dann ein Teil der Prozeßkammer.

Bei der Beschichtungsöffnung handelt es sich stets um eine tatsächliche Öffnung im Sinne eines Materialdurchbruchs. Für die Belichtungsöffnung muß das Heizelement hingegen nicht zwangsläufig durchbrochen sein. Die Belichtungsöffnung kann auch als ein Bereich geeigneten Materials in dem Grundkörper des Heizelements ausgeführt sein, das sich für einen Strahlungsdurchgang eignet.

In einer bevorzugten Ausführungsform der Erfindung erfolgt das Einbringen von Strahlungsenergie durch die Belichtungsöffnung, ohne daß diese Öffnung vollständig ausgeleuchtet wird. Statt dessen erfolgt eine gezielte Bestrahlung des unterhalb dieser Öffnung angeordneten Aufbaumaterials innerhalb der Grenzen dieser Öffnung. Die Strahlung kann dabei von einer oder mehreren Strahlungsquellen stammen. Beispielsweise können zum lokalen Erhitzen des Aufbaumaterials ein oder mehrere Laserstrahlen innerhalb des durch die Funktionsöffnung bereitgestellten Fensters eine lineare Hin- und Herbewegung innerhalb der Funktionsöffnung vollführen oder aber der oder die Laserstrahlen werden innerhalb des Fensters auf einer nichtlinearen Bahnkurve definiert geführt, jeweils in Abhängigkeit von der zu erzeugenden Struktur. Die Führung der Strahlung erfolgt mit Hilfe einer geeigneten Steuerung. Das zuvor auf eine Temperatur unterhalb der Verarbeitungstemperatur vorgewärmte Aufbaumaterial wird lokal weiter erhitzt. Mit Hilfe dieses zusätzlichen Energieeintrags wird die Verarbeitungstemperatur erreicht.

In einer einfachen Variante der Erfindung sind Anordnung und Größe der Funktionsöffnungen unveränderlich. So hat es sich als vorteilhaft erwiesen, streifenförmige Funktionsöffnungen zu verwenden, die parallel zueinander liegen. Die Funktionsöffnungen sind dabei vorteilhafterweise senkrecht zu der Richtung der Relativbewegung, beispielsweise senkrecht zu der x- oder der y-Richtung, in dem Heizelement angeordnet. Alternativ ist es möglich, daß die Funktionsöffnungen schräg, d.h. unter einem Winkel zu der Bewegungsrichtung, angeordnet sind. Bei der vorliegenden Erfindung von Vorteil ist es, daß die Form, Anordnung und Größe der Funktionsöffnungen an die Besonderheiten des Verfahrens angepaßt werden können. So können anstelle von streifen- oder schlitzförmigen Funktionsöffnungen für alle oder einzelne Funktionen beispielsweise auch lochförmige Funktionsöffnungen oder Funktionsöffnungen beliebiger anderer Form vorgesehen sein.

In einer alternativen Variante sind Form, Anordnung und/oder Größe der Funktionsöffnungen veränderbar. Beispielsweise kann es von Vorteil sein, die Größe der Belichtungsöffnung veränderbar auszuführen, insbesondere dann, wenn diese Funktionsöffnung als Blende dient, d. h. zur Begrenzung des Querschnitts der eingebrachten Strahlung. Ebenfalls kann es von Vorteil sein, die Größe der Beschichtungsöffnung veränderbar auszuführen, insbesondere dann, wenn Form und/oder Größe dieser Öffnung unmittelbar den Auftragsort bzw. das Volumen des je Zeiteinheit aufgebrachten Aufbaumaterials bestimmen. Eine Veränderung der Funktionsöffnungen kann insbesondere auch während der Laufzeit, also im laufenden Herstellungsprozeß erfolgen. Hierfür sind dann gegebenenfalls zusätzliche geeignete Antriebs- und Steuerungseinrichtungen vorgesehen.

Mit der vorliegenden Erfindung wird nicht nur der Wärmeeintrag in das Aufbaumaterial verbessert. Durch ein geeignetes Zusammenspiel der Anordnung und Größe der Funktionsöffnungen und der Relativbewegung zwischen Heizelement und Aufbauplattform sowie der Bereitstellung und/oder Führung der Strahlung zum lokalen Verfestigen des Aufbaumaterials kann der Herstellungsprozeß darüber hinaus auch besonders effizient durchgeführt werden.

Hierzu dient eine zentrale Steuerung des Herstellungsprozesses unter Verwendung eines Datenmodells zur Beschreibung des mit Hilfe des Schichtaufbauverfahrens herzustellenden Objektes. Die Steuerung umfaßt dabei alle relevanten Vorgänge des gleichzeitig an mehreren Stellen in unterschiedlichen Herstellungsphasen ablaufenden, d. h. unterschiedlich weit fortgeschrittenen Herstellungsprozesses. Mit anderen Worten erfolgt die Steuerung stets entsprechend dem tatsächlichen Fortgang des Herstellungsprozesses, wobei hierzu Sensordaten geeigneter Sensoren, insbesondere Temperatursensoren, verwendet werden. Die Steuerung umfaßt insbesondere die Steuerung der Heizung des Heizelements, hier gegebenenfalls die definierte Steuerung einzelner Temperaturbereiche. Die Steuerung umfaßt auch die Steuerung der Antriebseinrichtung für die Relativbewegungen zwischen Heizelement und Aufbauplattform und die Steuerung der Bereitstellungs- und/oder Aufbringeinrichtung zum Bereitstellen und/oder Aufbringen des Aufbaumaterials sowie die Steuerung der geführten Strahlungsquelle(n) zum lokalen Erhitzen des Aufbaumaterials und gegebenenfalls die Steuerung der zusätzlichen Heiz- und/oder Kühleinrichtung, wie auch gegebenenfalls die Steuerung der in Anordnung und/oder Größe veränderbaren Funktionsöffnungen.

Alle im Zusammenhang mit der Steuerung der Schichtbauanlage bzw. der Durchführung des erfindungsgemäßen Verfahrens erforderlichen Rechenoperationen werden dabei durch eine oder mehrere Datenverarbeitungseinheiten ausgeführt, die zur Durchführung dieser Operationen ausgebildet sind. Jede dieser Datenverarbeitungseinheiten weist vorzugsweise eine Anzahl von Funktionsmodulen auf, wobei jedes Funktionsmodul ausgebildet ist zur Durchführung einer bestimmten Funktion oder einer Anzahl bestimmter Funktionen gemäß den beschriebenen Verfahren. Bei den Funktionsmodulen kann es sich um Hardwaremodule oder Softwaremodule handeln. Mit anderen Worten kann die Erfindung, soweit es die Datenverarbeitungseinheit betrifft, entweder in Form von Computerhardware oder in Form von Computersoftware oder in einer Kombination aus Hardware und Software verwirklicht werden. Soweit die Erfindung in Form von Software, also als Computerprogrammprodukt, verwirklicht ist, werden sämtliche beschriebenen Funktionen durch Computerprogrammanweisungen realisiert, wenn das Computerprogramm auf einem Rechner mit einem Prozessor ausgeführt wird. Die Computerprogrammanweisungen sind dabei auf an sich bekannte Art und Weise in einer beliebigen Programmiersprache verwirklicht und können dem Rechner in beliebiger Form bereitgestellt werden, beispielsweise in Form von Datenpaketen, die über ein Rechnernetz übertragen werden, oder in Form eines auf einer Diskette, einer CD-ROM oder einem anderen Datenträger gespeicherten Computerprogrammprodukts.

Ein Ausführungsbeispiel der Erfindung wird nachfolgend anhand der Zeichnungen näher erläutert. Hierbei zeigen:
- Fig. 1: eine schematische Darstellung einer erfindungsgemäßen Vorrichtung mit einer im Schnitt dargestellten, stark vereinfachten Prozeßkammer,
- Fig. 2: eine schematische Darstellung eines über einer Aufbauplattform angeordneten Heizelements in Draufsicht,
- Fig. 3: vereinfachte Schnittdarstellungen von Schichten des aufzubauenden Objektes in unterschiedlichen Herstellungsphasen,
- Fig. 4: ein Detail der erfindungsgemäßen Vorrichtung mit einer zusätzlichen Heiz- und/oder Kühleinrichtung,
- Fig. 5: ein Detail der erfindungsgemäßen Vorrichtung mit einer anderen zusätzlichen Heiz- und/oder Kühleinrichtung.

Sämtliche Figuren zeigen die Erfindung nicht maßstabsgerecht, dabei lediglich schematisch und nur mit ihren wesentlichen Bestandteilen. Gleiche Bezugszeichen entsprechen dabei Elementen gleicher oder vergleichbarer Funktion.

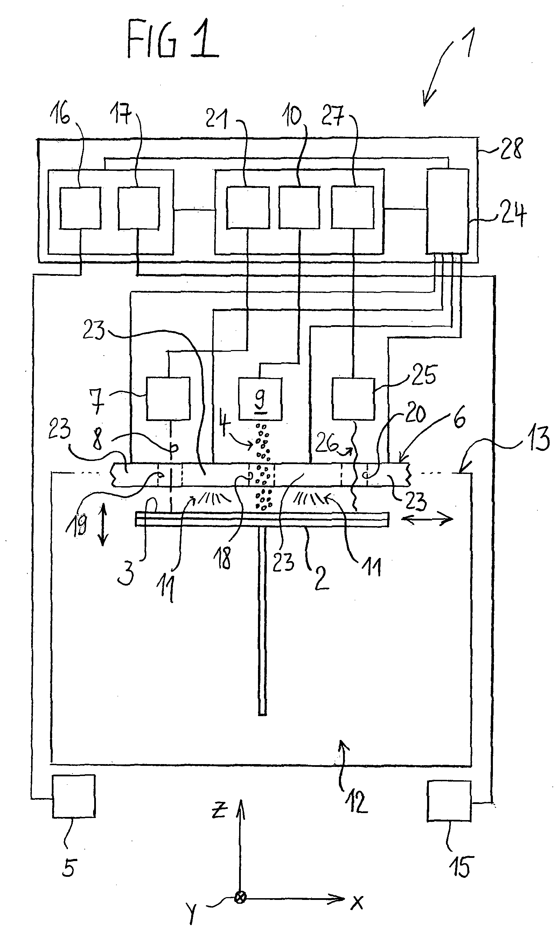

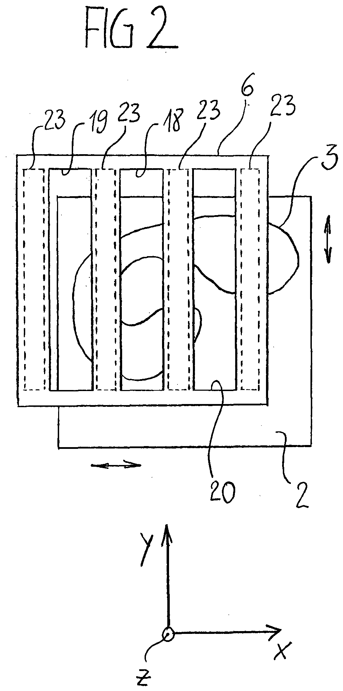

Anhand der Fig. 1 und 2 wird als Vorrichtung zum Herstellen wenigstens eines dreidimensionalen Objektes durch selektives Verfestigen eines schichtweise aufgebrachten Aufbaumaterials beispielhaft eine Vorrichtung 1 zum Lasersintern beschrieben. Die Erfindung ist jedoch nicht auf dieses spezielle Verfahren beschränkt. Die Erfindung ist auch auf andere additive Fertigungsverfahren anwendbar, wie beispielsweise Laserschmelzen, Maskensintern, Drop on Powder / Drop-on-Bed, Stereolithographie und dergleichen.

Bei der Beschreibung der Erfindung kommt ein orthogonales Koordinatensystem (x, y, z) zur Anwendung.

Die Vorrichtung 1 zum Lasersintern umfaßt eine in einer x-y-Ebene angeordnete Aufbauplattform 2, auf der ein dreidimensionales Objekt 3 in bekannter Art und Weise schichtweise erzeugt wird. Bei dem Aufbaumaterial 4 handelt es sich um ein geeignetes Kunststoffpulver. Nach der Herstellung einer Schicht n wird zur Herstellung einer neuen Schicht n+1 die Aufbauplattform 2 mit den bereits erstellten und erhärteten Schichten um eine bestimmte Weglänge nach unten verfahren. Hierzu dient eine Antriebseinrichtung 5 zum Erzeugen einer Relativbewegung zwischen der Aufbauplattform 3 und einem später genauer beschriebenen Heizelement 6 in z-Richtung, d. h. senkrecht zu der Aufbauebene. Bei der Antriebseinrichtung 5 handelt es sich beispielsweise um einen Elektromotor.

Zwischen dem Verfestigen einer Schicht n und dem Aufbringen von neuem Aufbaumaterial 4 für eine nachfolgende Schicht n+1 kann es vorgesehen sein, überschüssiges Aufbaumaterial 4 von der Aufbauplattform 2 zu entfernen. In diesem Fall ist eine hierfür geeignete Einrichtung (nicht abgebildet) vorgesehen, beispielsweise in Form eines Abstreifmessers oder dergleichen, welches vorteilhafterweise mit dem Heizelement 6 verbunden ist oder mit diesem zusammenwirkt.

Die Vorrichtung 1 umfaßt wenigstens eine Strahlungsquelle 7, die Strahlungsenergie zum lokalen Erhitzen von Aufbaumaterial 4 bereitstellt, um dieses selektiv zu verfestigen. Bei der wenigstens einen Strahlungsquelle 7 handelt es sich beispielsweise um einen Laser, der einen Laserstrahl 8 geführt abgibt.

Die Vorrichtung 1 umfaßt außerdem wenigstens eine Bereitstellungs- und/oder Aufbringeinrichtung 9, mit der Aufbaumaterial 4 bereitstellt und/oder auf die Aufbauplattform 2 oder eine bereits vorhandene Aufbauschicht aufgebracht wird. Bei der Bereitstellungs- und/oder Aufbringeinrichtung 9 handelt es sich beispielsweise um eine Einrichtung zum Aufbringen einer Pulverschüttung. Die Bereitstellungs- und/oder Aufbringeinrichtung 9 ist mit einer entsprechenden Steuerung 10 verbunden, die den Materialauftrag steuert.

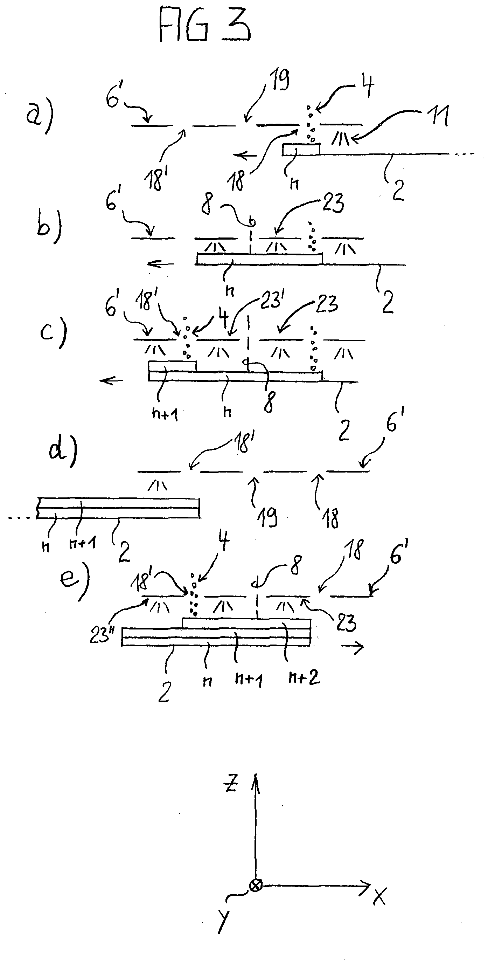

Die Vorrichtung 1 umfaßt weiter das oben bereits erwähnte, die Aufbauplattform 2 während der Herstellungsprozesses dauerhaft, zumindest teilweise überdeckende Heizelement 6 zum Eintragen von Wärmeenergie in das Aufbaumaterial 4. Das Heizelement 6 ist im wesentlichen plattenförmig ausgebildet. Es ist oberhalb der Aufbauplattform 2 angeordnet, wobei es von der jeweils obersten Aufbauschicht beabstandet ist. Der Abstand beträgt typischerweise zwischen 100 µm und 10 mm. Das Aufwärmen des Aufbaumaterials 4 erfolgt durch von dem Heizelement 6 abgegebene Wärmestrahlung 11, wie sie in den Fig. 1 und 3 symbolisch dargestellt ist.

Die Aufbauplattform 2 befindet sich innerhalb einer im Betriebszustand geschlossenen Prozeßkammer 12, die in Fig. 1 nur schematisch angedeutet ist. Das Heizelement 6 dient dabei als Begrenzungswand der Prozeßkammer 12. Genauer gesagt ist das Heizelement 6 als Teil der oberen Abdeckung 13 der Prozeßkammer 12 ausgeführt.

Die Vorrichtung 1 umfaßt zudem eine Antriebseinrichtung 15 zum Erzeugen einer Relativbewegung zwischen der Aufbauplattform 2 und dem Heizelement 6 in x- und/oder y-Richtung, d. h. in einer Schichtrichtung. Bei der Antriebseinrichtung 15 handelt es sich beispielsweise um einen Elektromotor. Beide Antriebseinrichtungen 5, 15 sind mit entsprechenden Antriebssteuerungen 16, 17 verbunden.

In dem hier beschriebenen Ausführungsbeispiel bewegt die Antriebseinrichtung 15 die Aufbauplattform 2 relativ zu dem feststehenden Heizelement 6. Die Hauptbewegungsrichtung ist die x-Richtung. Im einfachsten Fall beschränkt sich die Bewegung der Aufbauplattform 2 auf diese Hauptbewegungsrichtung. Falls für den Herstellungsprozeß erforderlich oder vorteilhaft, kann die Bewegung in x-Richtung von einer Bewegung der Aufbauplattform 2 in y-Richtung überlagert werden.

Das Heizelement 6 weist wenigstens zwei, in dem in Fig. 1 dargestellten Beispiel drei gleichzeitig verwendbare, voneinander beabstandete Funktionsöffnungen 18, 19, 20 auf. Die Funktionsöffnungen 18, 19, 20 sind schlitz- bzw. streifenförmig, langgestreckt rechteckig, liegen parallel zueinander und senkrecht zu der Hauptbewegungsrichtung, hier der x-Richtung. Eine der Funktionsöffnungen ist als Materialdurchlaß 18 und eine andere der Funktionsöffnungen als Strahlungsdurchlaß 19 ausgebildet. Während des Erzeugens des Objektes 3 wird gleichzeitig sowohl Aufbaumaterial 4 als auch Strahlungsenergie, hier in Form des Laserstrahls 8, durch die Funktionsöffnungen 18, 19 hindurchgelassen.

Anders ausgedrückt ist die eine Funktionsöffnung als Beschichtungsöffnung 18 zum Aufbringen von Aufbaumaterial 4 auf die Aufbauplattform 2 oder eine bereits vorhandene Aufbauschicht ausgebildet und die andere Funktionsöffnung ist als Belichtungsöffnung 19 zum gleichzeitigen Einbringen von Strahlungsenergie der wenigstens einen Strahlungsquelle 7 in das aufgebrachte Aufbaumaterial 4 zum Verfestigen des Aufbaumaterials 4 ausgebildet.

Das Einbringen von Strahlungsenergie zum lokalen Erhitzen des Aufbaumaterials 4 erfolgt, indem der Laserstrahl 8 durch die Belichtungsöffnung 19 hindurch auf einer definierten Bahn geführt wird. Die Führung des Laserstrahls 8 erfolgt mit Hilfe einer geeigneten Antriebs- und Steuerungseinrichtung 21.

Das Heizelement 6 weist mehrere, voneinander unabhängig ansteuerbare Heizmodule 23 auf, die zwischen bzw. neben den Funktionsöffnungen 18, 19, 20 angeordnet sind. Alle Heizmodule 23 des Heizelements 6 sind mit einer Heizungssteuerung 24 verbunden. Das Arbeitsprinzip der Heizmodule 23 beruht beispielsweise auf dem Prinzip der elektrischen Induktion. Geeignete andere Funktionsweisen der Heizmodule sind ebenfalls möglich.

Die Vorrichtung 1 umfaßt in dem in Fig. 1 illustrierten Beispiel auch eine zusätzliche Heizeinrichtung mit einer Wärmequelle in Form einer oberhalb des Heizelements 6 angeordneten Strahlungsquelle 25 zur Bereitstellung von Wärmeenergie. Bei dieser zusätzlichen Strahlungsquelle 25 handelt es sich beispielsweise um einen Infrarotstrahler, der Infrarotstrahlung 26 abgibt. Für diese Strahlungsquelle 25 ist ebenfalls eine geeignete Steuerung 27 vorgesehen. Dieser zusätzlichen Strahlungsquelle 25 ist eine eigene Funktionsöffnung 20 zugewiesen, die somit als Heizöffnung dient.

Eine zentrale Steuerung 28 ist für den kontrollierten Ablauf des Herstellungsverfahrens verantwortlich. Die Steuerung 28 umfaßt hierfür alle relevanten Teilsteuerungen 10, 16, 17, 21, 24, 27.

Anhand der Fig. 3 werden nachfolgend verschiedene Phasen der Herstellung beschrieben. Dabei kommt ein von dem in den Fig. 1 und 2 gezeigten Heizelement 6 verschiedenes Heizelement 6' zur Anwendung, welches über drei Funktionsöffnungen verfügt, nämlich über zwei Beschichtungsöffnungen 18, 18' und eine zwischen den Beschichtungsöffnungen 18, 18' angeordnete Belichtungsöffnung 19.

In Fig. 3a bewegt sich die Aufbauplattform 2, angetrieben von der Antriebseinrichtung 15, in x-Richtung unter der ersten Beschichtungsöffnung 18 des Heizelements 6 hindurch. Es wird Aufbaumaterial 4 für eine Schicht n auf die Aufbauplattform 2 aufgebracht.

In Fig. 3b bewegt sich die Aufbauplattform 2 in x-Richtung weiter. Das kurz zuvor aufgebrachte Aufbaumaterial 4 wird durch ein zwischen der ersten Beschichtungsöffnung 18 und der Belichtungsöffnung 19 in dem Grundkörper des Heizelements 6 angeordnetes Heizmodul 23 auf eine Temperatur unterhalb der Sintertemperatur vorgewärmt. Gleichzeitig erfolgt in einen benachbarten, kurz zuvor vorgewärmten Objektbereich ein Einbringen zusätzlicher Wärmeenergie mit Hilfe des Laserstrahls 8 durch die Belichtungsöffnung 19, wodurch die Pulverteilchen aufschmelzen.

In Fig. 3c bewegt sich die Aufbauplattform 2 in x-Richtung weiter. Bevor die Aufbauplattform 2 die zweite Beschichtungsöffnung 18' erreicht, wird sie, angetrieben von der Antriebseinrichtung 5, in z-Richtung eine erforderliche Wegstrecke nach unten bewegt. Durch die zweite Beschichtungsöffnung 18' wird Aufbaumaterial 4 für eine weitere Schicht n+1 aufgebracht. Kurz zuvor wurde dieser Objektbereich durch ein zwischen der Belichtungsöffnung 19 und der zweiten Beschichtungsöffnung 18' angeordneten weiteres Heizmodul 23' erneut erwärmt.

In Fig. 3d hat die Aufbauplattform 2 ihren einen Umkehrpunkt erreicht. Die Schichten n und n+1 wurden erzeugt. Da keine Belichtungsöffnung 19 mehr über der Aufbauplattform 2 angeordnet ist, findet in diesem Augenblick keine Laserbestrahlung mehr statt. Auch das Aufbringen von Aufbaumaterial 4 erfolgt nur solange, wie wenigstens eine der beiden Beschichtungsöffnungen 18, 18' über der Aufbauplattform 2 angeordnet ist.

In Fig. 3e bewegt sich die Aufbauplattform 2 in x-Richtung, entgegengesetzt zu der ersten Bewegung, unter dem Heizelement 6 hindurch. Mit Hilfe der zweiten Beschichtungsöffnung 18' ist bereits ein neuer Materialauftrag für die nächste Schicht n+2 erfolgt, ebenso wie ein Vorwärmen mit Hilfe eines dritten Heizmoduls 23". Zuvor wurde die Aufbauplattform 2, angetrieben von der Antriebseinrichtung 5, erneut eine erforderliche Wegstrecke in z-Richtung nach unten bewegt. Durch die Belichtungsöffnung 19 erfolgt eine lokale Bestrahlung mit dem Laserstrahl 8 zum Verfestigen der zu erzeugenden Struktur. Das erste Heizmodul 23 dient zum Nachheizen. Bei einer weiteren Bewegung der Aufbauplattform 2 wird in Kürze durch die erste Beschichtungsöffnung 18 ein Materialauftrag für die Schicht n+3 erfolgen.

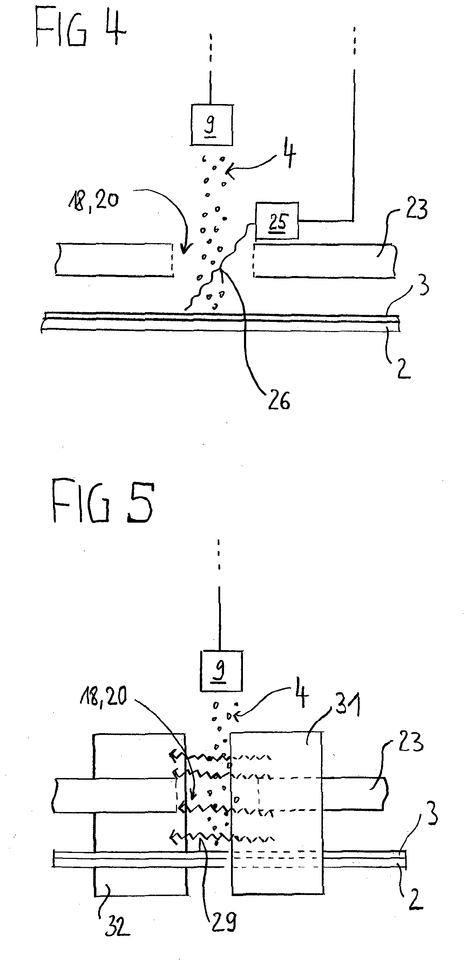

Fig. 4 zeigt ein Ausführungsbeispiel der Erfindung mit einer zusätzlichen Heizeinrichtung zur Temperierung des Aufbaumaterials 4, das durch die Beschichtungsöffnung 18 hindurchfällt. Als Heizelement dient, wie bei dem in Fig. 1 illustrierten Beispiel, ein von der Steuerung 27 ansteuerbarer Wärmestrahler 25, der an einer Kante der Beschichtungsöffnung 18 angeordnet ist. Ist statt der Heizeinrichtung eine Kühleinrichtung oder eine kombinierte Heiz- und/oder Kühleinrichtung vorgesehen, nimmt ein Kühlelement (nicht dargestellt) die Stelle des Heizelements 25 ein.

Fig. 5 zeigt ein weiteres Ausführungsbeispiel der Erfindung, bei dem die zusätzliche Heiz- und/oder Kühleinrichtung zur Bereitstellung eines temperierten Gasstromes 29 am Ort des Materialauftrags, hier also im Bereich der Beschichtungsöffnung 18, ausgebildet ist. In diesem Fall ist im Bereich der Beschichtungsöffnung 18 auf einer Seite der Aufbauplattform 2 ein mit einem Heiz- oder Kühlelement (nicht abgebildet) verbundenes Gebläse 31 und/oder auf der gegenüberliegenden Seite der Aufbauplattform 2 eine Absaugeinrichtung 32 angeordnet derart, daß der temperierte Gasstrom 29 das durch die Beschichtungsöffnung hindurchfallende Aufbaumaterial 4 erwärmt oder abkühlt.

In weiteren Ausführungsbeispielen (nicht dargestellt) ist die zusätzliche Heiz- und/oder Kühleinrichtung derart ausgebildet, daß der temperierte Gasstrom 29 ausschließlich oder zusätzlich im Bereich der Belichtungsöffnung 19 und/oder in Bereichen in der Nähe der Belichtungsöffnung 19 bereitgestellt wird, um die Prozeßtemperatur beim Aufschmelzen des Aufbaumaterials 4 zu kontrollieren. Dabei kann diejenige Heiz- und/oder Kühleinrichtung, welche den Bereich der Beschichtungsöffnung 18 beströmt, derart ausgebildet sein, daß der Gasstrom 29 auch benachbarte Bereiche des Objektes 3 bzw. der Aufbauplattform 2 überstreicht. Es können aber auch mehrere zusätzliche Heiz- oder Kühleinrichtungen eingesetzt werden.

Zusammenfassend betrifft die Erfindung eine Vorrichtung 1 zum Herstellen dreidimensionaler Objekte 3 durch selektives Verfestigen eines schichtweise aufgebrachten Aufbaumaterials 4, mit einer in einer x-y-Ebene angeordneten Aufbauplattform 2, auf der wenigstens ein dreidimensionales Objekt 3 schichtweise erzeugt wird, mit einem die Aufbauplattform 2 zumindest teilweise überdeckenden Heizelement 6 zum Eintragen von Wärmeenergie 11 in das Aufbaumaterial 4, mit einer Antriebseinrichtung 15 zum Erzeugen einer Relativbewegung zwischen der Aufbauplattform 2 und dem Heizelement 6 in x- und/oder y-Richtung, wobei das Heizelement 6 wenigstens zwei gleichzeitig verwendbare Funktionsöffnungen 18, 19 aufweist,
wobei eine der wenigstens zwei Funktionsöffnungen als Materialdurchlaß 18 und eine andere der wenigstens zwei Funktionsöffnungen als Strahlungsdurchlaß 19 ausgebildet ist. Diese Vorrichtung 1 umfaßt erfindungsgemäß eine zusätzliche Heiz- und/oder Kühleinrichtung zur Temperierung von durch den Materialdurchlaß 18 aufgebrachtem Aufbaumaterial 4.

Vorteilhafterweise umfaßt die zusätzliche Heiz- und/oder Kühleinrichtung eine Wärmequelle 25, ausgebildet zum Bereitstellen von Wärmeenergie, wobei vorzugsweise eine der wenigstens zwei Funktionsöffnungen 18, 19, 20 zugleich oder ausschließlich als Heizöffnung 20 zum zusätzlichen Eintragen von Wärmeenergie ausgebildet ist. Vorteilhafterweise umfaßt die zusätzliche Heiz- oder Kühleinrichtung ein Kühlelement, ausgebildet zum Entziehen von Wärmeenergie, wobei vorzugsweise eine der wenigstens zwei Funktionsöffnungen 18, 19, 20 zugleich oder ausschließlich als Kühlöffnung 20 zum Entziehen von Wärmeenergie ausgebildet ist. Vorteilhafterweise ist die zusätzliche Heiz- und/oder Kühleinrichtung, insbesondere deren Wärmequelle 25 oder Kühlelement, in unmittelbarer Nähe der als Materialdurchlaß dienenden Funktionsöffnung 18 angeordnet, insbesondere an einer Kante dieser Funktionsöffnung 18. Vorteilhafterweise ist die zusätzliche Heiz- und/oder Kühleinrichtung zur Bereitstellung eines temperierten Gasstromes ausgebildet. Vorteilhafterweise stellt die zusätzliche Heiz- und/oder Kühleinrichtung den temperierten Gasstrom in der Funktionsöffnung 18 und/oder an dem Ort des Materialauftrags bereit.

Vorteilhafterweise überdeckt das Heizelement 6 die Aufbauplattform 2 dauerhaft zumindest teilweise. Vorteilhafterweise können das Heizelement 6 und die Aufbauplattform 2 vollständig in Überdeckung miteinander gebracht werden. Vorteilhafterweise ist das Heizelement 6 im wesentlichen plattenförmig ausgebildet. Vorteilhafterweise ist das Heizelement 6 oberhalb der Aufbauplattform 2 angeordnet; dabei ist es entweder von der obersten Aufbauschicht beabstandet oder aber es berührt die oberste Aufbauschicht. Vorteilhafterweise befindet sich die Aufbauplattform 2 innerhalb einer im Betriebszustand geschlossenen Prozeßkammer 12 und das Heizelement 6 dient als Begrenzungswand der Prozeßkammer 12. Vorteilhafterweise weist das Heizelement 6 unterschiedlich temperierbare Bereiche auf. Vorteilhafterweise ist Form, Anordnung und/oder Größe der Funktionsöffnungen 18, 19, 20 veränderbar.

Die Erfindung betrifft weiterhin ein Verfahren zum Herstellen dreidimensionaler Objekte 3 durch selektives Verfestigen eines schichtweise aufgebrachten Aufbaumaterials 4, wobei auf einer in einer x-y-Ebene angeordneten Aufbauplattform 2 wenigstens ein dreidimensionales Objekt 3 schichtweise erzeugt wird, wobei ein die Aufbauplattform 2 zumindest teilweise überdeckendes Heizelement 6 Wärmeenergie 11 in das Aufbaumaterial 4 einträgt, wobei eine Antriebseinrichtung 15 eine Relativbewegung zwischen der Aufbauplattform 2 und dem Heizelement 6 in x- und/oder y-Richtung erzeugt, wobei das Heizelement 6 unter Verwendung von wenigstens zwei Funktionsöffnungen 18, 19, 20 gleichzeitig Aufbaumaterial 4 und Strahlungsenergie 8 durchläßt. Das Verfahren umfaßt ein Heizen oder Kühlen des durch den Materialdurchlaß 18 aufgebrachten Aufbaumaterials 4 mittels einer zusätzlichen Heiz- und/oder Kühleinrichtung.

Alle in der Beschreibung, den nachfolgenden Ansprüchen und der Zeichnung dargestellten Merkmale können sowohl einzeln, als auch in beliebiger Kombination miteinander erfindungswesentlich sein.

### Bezugszeichenliste

- 1: Vorrichtung zum Lasersintern
- 2: Aufbauplattform
- 3: Objekt
- 4: Aufbaumaterial
- 5: Antriebseinrichtung (z)
- 6: Heizelement
- 7: Strahlungsquelle, Laser
- 8: Laserstrahl
- 9: Bereitstellungs-/Aufbringeinrichtung
- 10: Steuerung des Materialauftrags
- 11: Wärmestrahlung
- 12: Prozeßkammer
- 13: Abdeckung
- 14: (frei)
- 15: Antriebseinrichtung (x/y)
- 16: Antriebssteuerung (z)
- 17: Antriebssteuerung (x/y)
- 18: Funktionsöffnung, Materialdurchlaß, Beschichtungsöffnung
- 19: Funktionsöffnung, Strahlungsdurchlaß, Belichtungsöffnung
- 20: Funktionsöffnung, Heiz- oder Kühlöffnung
- 21: Antriebs- und Steuerungseinrichtung des Lasers
- 22: (frei)
- 23: Heizmodul
- 24: Heizungssteuerung
- 25: Strahlungsquelle, IR-Strahler
- 26: Infrarotstrahlung
- 27: Steuerung der Zusatzheizung
- 28: zentrale Steuerung
- 29: Gasstrom
- 30: (frei)
- 31: Gebläse
- 32: Absaugeinrichtung

## Patentansprüche

1. Vorrichtung (1) zum Herstellen dreidimensionaler Objekte (3) durch selektives Verfestigen eines schichtweise aufgebrachten Aufbaumaterials (4),
- mit einer in einer x-y-Ebene angeordneten Aufbauplattform (2), auf der wenigstens ein dreidimensionales Objekt (3) schichtweise erzeugt wird,
- mit einem die Aufbauplattform (2) zumindest teilweise überdeckenden Heizelement (6) zum Eintragen von Wärmeenergie (11) in das Aufbaumaterial (4),
- mit einer Antriebseinrichtung (15) zum Erzeugen einer Relativbewegung zwischen der Aufbauplattform (2) und dem Heizelement (6) in x- und/oder y-Richtung,
wobei das Heizelement (6) wenigstens zwei gleichzeitig verwendbare Funktionsöffnungen (18, 19) aufweist,
wobei eine der wenigstens zwei Funktionsöffnungen als Materialdurchlaß (18) und eine andere der wenigstens zwei Funktionsöffnungen als Strahlungsdurchlaß (19) ausgebildet ist,
und mit einer zusätzlichen Heiz- und/oder Kühleinrichtung (25) zur Temperierung von durch den Materialdurchlaß (18) aufgebrachtem Aufbaumaterial (4).

2. Vorrichtung (1) nach Anspruch 1, wobei die zusätzliche Heiz-
und/oder Kühleinrichtung eine Wärmequelle (25) umfaßt, ausgebildet zum Bereitstellen von Wärmeenergie.

3. Vorrichtung (1) nach Anspruch 2, wobei eine der wenigstens zwei Funktionsöffnungen (18, 19, 20) zugleich oder ausschließlich als Heizöffnung (20) zum zusätzlichen Eintragen von Wärmeenergie ausgebildet ist.

4. Vorrichtung (1) nach einem der Ansprüche 1 bis 3, wobei die zusätzliche Heiz- und/oder Kühleinrichtung ein Kühlelement umfaßt, ausgebildet zum Entziehen von Wärmeenergie.

5. Vorrichtung (1) nach Anspruch 4, wobei eine der wenigstens zwei Funktionsöffnungen (18, 19, 20) zugleich oder ausschließlich als Kühlöffnung (20) zum Entziehen von Wärmeenergie ausgebildet ist.

6. Vorrichtung (1) nach einem der Ansprüche 1 bis 5, wobei die zusätzliche Heiz- und/oder Kühleinrichtung, insbesondere deren Wärmequelle (25) oder Kühlelement, in unmittelbarer Nähe der als Materialdurchlaß dienenden Funktionsöffnung (18) angeordnet ist, insbesondere an einer Kante dieser Funktionsöffnung (18).

7. Vorrichtung (1) nach einem der Ansprüche 1 bis 6, wobei die zusätzliche Heiz- und/oder Kühleinrichtung zur Bereitstellung eines temperierten Gasstromes ausgebildet ist.

8. Vorrichtung (1) nach Anspruch 7, wobei die zusätzliche Heiz- oder Kühleinrichtung den temperierten Gasstrom in der Funktionsöffnung (18) und/oder an dem Ort des Materialauftrags bereitstellt.

9. Verfahren zum Herstellen dreidimensionaler Objekte (3) durch selektives Verfestigen eines schichtweise aufgebrachten Aufbaumaterials (4),
- wobei auf einer in einer x-y-Ebene angeordneten Aufbauplattform (2) wenigstens ein dreidimensionales Objekt (3) schichtweise erzeugt wird,
- wobei ein die Aufbauplattform (2) zumindest teilweise überdeckendes Heizelement (6) Wärmeenergie (11) in das Aufbaumaterial (4) einträgt,
- wobei eine Antriebseinrichtung (15) eine Relativbewegung zwischen der Aufbauplattform (2) und dem Heizelement (6) in x- und/oder y-Richtung erzeugt,
wobei das Heizelement (6) unter Verwendung von wenigstens zwei Funktionsöffnungen (18, 19, 20) gleichzeitig Aufbaumaterial (4) und Strahlungsenergie (8) durchläßt,
und wobei eine zusätzliche Heiz- und/oder Kühleinrichtung (25) das durch den Materialdurchlaß (18) aufgebrachte Aufbaumaterial (4) heizt oder kühlt.

## Claims

1. An apparatus (1) for manufacturing three-dimensional objects (3) by selective solidification of a build material (4) applied in layers,
- having a build platform (2), arranged in an X-Y plane, on which at least one three-dimensional object (3) is generated in layers,
- having a heating element (6), at least partly overlying the build platform (2), for inputting thermal energy (11) into the build material (4),
- having a drive device (15) for generating a relative motion in an X and/or Y direction between the build platform (2) and the heating element (6),
the heating element (6) comprising at least two simultaneously usable functional openings (18, 19),
one of the at least two functional openings being embodied as a material passthrough (18) and another of the at least two functional openings being embodied as a radiation passthrough (19),
and having an additional heating and/or cooling device (25) for controlling the temperature of build material (4) applied through the material passthrough (18).

2. The apparatus (1) according to Claim 1, the additional heating and/or cooling device encompassing a heat source (25) embodied to furnish thermal energy.

3. The apparatus (1) according to Claim 2, one of the at least two functional openings (18, 19, 20) being embodied simultaneously or exclusively as a heating opening (20) for additional input of thermal energy.

4. The apparatus (1) according to one of Claims 1 to 3, the additional heating and/or cooling device encompassing a cooling element embodied to extract thermal energy.

5. The apparatus (1) according to Claim 4, one of the at least two functional openings (18, 19, 20) being embodied simultaneously or exclusively as a cooling opening (20) for extraction of thermal energy.

6. The apparatus (1) according to one of Claims 1 to 5, the additional heating and/or cooling device, in particular its heat source (25) or cooling element, being arranged in the immediate vicinity of the functional opening (18) serving as a material passthrough, in particular at an edge of said functional opening (18).

7. The apparatus (1) according to one of Claims 1 to 6, the additional heating and/or cooling device being embodied to furnish a temperature-controlled gas flow.

8. The apparatus (1) according to Claim 7, the additional heating and/or cooling device furnishing the temperature-controlled gas flow in functional opening (18) and/or at the material application site.

9. A method for manufacturing three-dimensional objects (3) by selective solidification of a build material (4) applied in layers,
- at least one three-dimensional object (3) being generated, in layers, on a build platform (2) arranged in an X-Y plane,
- a heating element (6) that at least partly overlies the build platform (2) inputting thermal energy (11) into the build material (4),
- a drive device (15) generating a relative motion in an X and/or Y direction between the build platform (2) and the heating element (6),
the heating element (6), utilizing at least two functional openings (18, 19, 20), allowing build material (4) and radiation energy (8) to pass through simultaneously,
and an additional heating and/or cooling device (25) heating or cooling the build material (4) applied through the material passthrough (18).

## Revendications

1. Dispositif (1) de fabrication d'objets tridimensionnels (3) par solidification sélective d'un matériau de construction (4) appliqué en couches,
- avec une plate-forme de construction (2) disposée dans un plan x-y sur laquelle est produit en couches au moins un objet tridimensionnel (3),
- avec un élément chauffant (6) recouvrant au moins en partie la plate-forme de construction (2) pour apporter de l'énergie thermique (11) dans le matériau de construction (4),
- avec un dispositif d'entraînement (15) pour générer un mouvement relatif entre la plate-forme de construction (2) et l'élément chauffant (6) dans la direction x et/ou y,
l'élément chauffant (6) présentant au moins deux ouvertures fonctionnelles (18, 19) pouvant être utilisées simultanément,
l'une des au moins deux ouvertures fonctionnelles étant réalisée sous forme de passage de matériau (18) et une autre des au moins deux ouvertures fonctionnelles étant réalisée sous forme de passage de rayonnement (19), et avec un dispositif de chauffage et/ou de refroidissement supplémentaire (25) pour réguler la température de matériau de construction (4) appliqué à travers le passage de matériau (18).

2. Dispositif (1) selon la revendication 1, dans lequel le dispositif de chauffage et/ou de refroidissement supplémentaire comprend une source de chaleur (25), réalisée pour fournir de l'énergie thermique.

3. Dispositif (1) selon la revendication 2, dans lequel l'une des au moins deux ouvertures fonctionnelles (18, 19, 20) est réalisée en même temps ou exclusivement en tant qu'ouverture de chauffage (20) pour l'apport simultané d'énergie thermique.

4. Dispositif (1) selon l'une quelconque des revendications 1 à 3, dans lequel le dispositif de chauffage et/ou de refroidissement supplémentaire comprend un élément de refroidissement réalisé pour prélever de l'énergie thermique.

5. Dispositif (1) selon la revendication 4, dans lequel l'une des au moins deux ouvertures fonctionnelles (18, 19, 20) est réalisée en même temps ou exclusivement sous forme d'ouverture de refroidissement (20) pour prélever de l'énergie thermique.

6. Dispositif (1) selon l'une quelconque des revendications 1 à 5, dans lequel le dispositif de chauffage et/ou de refroidissement supplémentaire, en particulier sa source de chaleur (25) ou son élément de refroidissement, est disposé à proximité immédiate de l'ouverture fonctionnelle (18) servant de passage de matériau, en particulier au niveau d'un bord de cette ouverture fonctionnelle (18).

7. Dispositif (1) selon l'une quelconque des revendications 1 à 6, dans lequel le dispositif de chauffage et/ou de refroidissement supplémentaire est réalisé pour fournir un flux de gaz régulé en température.

8. Dispositif (1) selon la revendication 7, dans lequel le dispositif de chauffage et/ou de refroidissement supplémentaire fournit le flux de gaz régulé en température dans l'ouverture fonctionnelle (18) et/ou sur le site de l'application de matériau.

9. Procédé de fabrication d'objets tridimensionnels (3) par solidification sélective d'un matériau de construction (4) appliqué en couches,
- au moins un objet tridimensionnel (3) étant produit en couches sur une plate-forme de construction (2) disposée dans un plan x-y,
- un élément chauffant (6) recouvrant au moins en partie la plate-forme de construction (2) apportant de l'énergie thermique (11) dans le matériau de construction (4),
- un dispositif d'entraînement (15) générant un mouvement relatif entre la plate-forme de construction (2) et l'élément chauffant (6) dans la direction x et/ou y,
l'élément chauffant (6), en utilisant au moins deux ouvertures fonctionnelles (18, 19, 20), laissant passer simultanément du matériau de construction (4) et de l'énergie de rayonnement (8), et un dispositif de chauffage et/ou de refroidissement supplémentaire (25) chauffant ou refroidissant le matériau de construction (4) appliqué à travers le passage de matériau (18).
